# EUROPEAN PATENT APPLICATION

(11) **EP 1 351 145 A1**
(43) Date of publication of application: **08.10.2003**
(21) Application number: 02354056.0
(22) Date of filing: 04.04.2002
(51) Int. Cl.: G06F 11/14

(54) **Computer failure recovery and notification system**

(71) Applicant: Hewlett-Packard Company, Palo Alto, CA 94304 (US)
(72) Inventor: Richard, Bruno, 38920 Crolles (FR)
(74) Representative: Lloyd, Richard Graham

(57) **Abstract**

The invention provides a method of recovering from a computer system crash, the method including the steps of configuring the computers chipset timer to count down for a predetermined interval, configuring the computers operating system application to supply the chipset with a heartbeat signal; wherein the chipset is adapted so that on receipt of at least one heartbeat signal from the operating system, the chipset timer is reset and begins counting down again, or, if no heartbeat signal is received from the operating system within the countdown period, it causes the computer system to reset. The method may be implemented using the system management mode or alternatively, using motherboard chipset functionality whereby a chipset timer monitors the computer system for a heartbeat signal. The absence of the periodic heartbeat signal is interpreted as a system hang or failure and a reset signal is triggered thereby rebooting the computer. The invention may be applied in a range of computer types including desktops, servers and the like.

## Description

### Technical Field

The present invention relates to methods and apparatus for monitoring and recovering from microprocessor failures in computer systems. Recovery may include taking remedial action such as error logging, notification, powering up machines for system management purposes and the like. More particularly, although not exclusively, the present invention relates to methods and apparatus for rebooting computer systems in situations where a computer locks up.

### Background Art

The present invention in concerned with diagnosing and recovering from computer failure. In particular, although without limitation, the following description will focus on the PC-AT architecture. However, the invention may be applied to other system architectures having a basic input/output system (BIOS) and microprocessor (CPU) which is capable of modification or operation in accordance with the invention.

Computer failures can result from, amongst other things, the corruption of a machines processor, RAM or cache memory, conflicts between hardware components, or from software errors. Failures can also be attributed to unpredictable or faulty interaction between hardware and operating system (OS) and/or application software.

The machine entering in a hung or unresponsive state generally manifests such failures. In such a condition it is usually impossible to interrupt the computers operation by means of the operating system interface to reset the computer or to diagnose the cause of the failure.

It is self-evident that such microprocessor failures can cause serious problems. This is particularly acute in the case of machines, such as network servers, routers or clusters which operate unattended. Here, failures can propagate network instability and cause consequential failures in network functions. These types of machines and networks are often remotely administered and if a machine crashes for some reason and the machine enters an unresponsive state, it may be impossible to remotely access the computer in order to initiate a reboot or to carry out network maintenance. In these situations, it is necessary for a field technician to be able to physically access the machine.

Failure recovery might involve no more operator intervention than simply resetting the system and executing power-up and booting procedures. For a personal computer this may equate to merely recycling the power or initiating a reboot. For a server the procedure may be more complicated. However, such techniques require the physical presence of a system administrator or a user.

Therefore, the ability for a hung computer to autonomously perform a reboot or other diagnostic function would be a significant advantage. There exist a number of methods that attempt to address this requirement and these are discussed as follows.

The Remote Power On facility provides the ability for a remotely located system administrator to power-up a remote machine in order to carry out administration and other maintenance functions. However, this technique requires that the machine be reachable or at least responsive to a wake-up command or other communication. It may be impossible to remotely power-up a machine that has crashed and is unresponsive to externally entered commands.

There are a number of hardware-based solutions which operate by monitoring the operation of the computer. Depending on the precise signals that a peripheral device is configured to detect, remedial action is taken if the computer enters a non-responsive state. The hung computer may then be rebooted or a notification signal sent to a system administrator. Solutions such as these can be considerably robust. However they do require additional hardware and therefore impose a cost burden in terms of manufacture and support. Also, in relatively small computers such as laptops and in embedded control systems, it may not be possible to install such a device due to physical space limitations or in the case of retro-fitting, re-engineering.

Details of these type of peripheral solutions can be found in the details of the applicants own Top Tools™ Remote Management Card and in the Automated Server Recovery System described in U.S. patent number 5,390,324 to Compaq Inc. The latter system is an application-specific integrated circuit embedded in the Compaq server system board. It incorporates a hardware timer that communicates with the operating system through the system management driver that runs a constant countdown.

If the operating system does not communicate as expected, the countdown reaches zero, the circuit assumes that the operating system is locked up and automatically triggers a reboot either back to the operating system or into a system partition. In the latter case, the admin can remotely connect to the machine and attempt to carry out diagnostics.

Both of these solutions are based on the inclusion of additional specific hardware. This can involve additional cost and complication and may itself introduce system problems or instabilities depending on the specific operating system and machine architecture.

Another solution was provided in the IBM OS/2 operating system (Tempus Fugit), which operates by generating an IRQ 8 every three seconds, and which would reboot where the computer remained inactive for the preceding three seconds. However, although this solution was implemented in software it has been found to be unable to detect certain types of software failures and if the machine is completely hung, then recovery is impossible without intervention.

It is therefore an object of the present invention to provide a method and apparatus for detecting computer failure and providing mechanisms for recovery including notification and system power-up and reboot where necessary.

It is an object of the invention to achieve this in a way which is independent of any extraneous circuitry or hardware, is unaffected by microprocessor or peripheral failure and is simple and inexpensive to implement.

### Disclosure of the Invention

In one aspect the invention provides for a method of recovering from a computer system crash, the method including the steps of:
(a) configuring a computers chipset timer to count down for a predetermined interval;
(b) configuring an operating system application to supply the chipset with a heartbeat signal;
(c) wherein the chipset is adapted so that: on receipt of at least one heartbeat signal from the operating system, the chipset timer is reset and begins counting down again, or, if no heartbeat signal is received from the operating system, the causes the computer system to reset.

Preferably, the chipset is incorporated into a computers motherboard.

The method is preferably implemented using System Management Mode which is adapted to function in a manner which is transparent to the operating system or any application running on the computer system.

Preferably, the chipset functions are implemented through a System Management Interrupt which is non-maskable and has a higher priority than a standard non-maskable interrupt and operates independently of the computer systems microprocessor operating mode.

If no heartbeat signal is detected within the chipset countdown period, the chipset calls a system management interrupt reset which causes the microprocessor to reboot thereby resetting the computer system.

The monitoring functions of the method may be implemented in the system management mode secure address space.

The invention also provides for a computer adapted to perform the method as hereinbefore defined.

In a further aspect, the invention provides a chip or CPU adapted to perform the method as hereinbefore defined.

In a further aspect, the invention provides for a BIOS which may be adapted to control the System Management Mode operations so as to carry out the heartbeat monitoring functions as hereinbefore defined.

### Brief Description of the Drawings

The present invention will now be described by way of example only and with reference to the drawings in which:

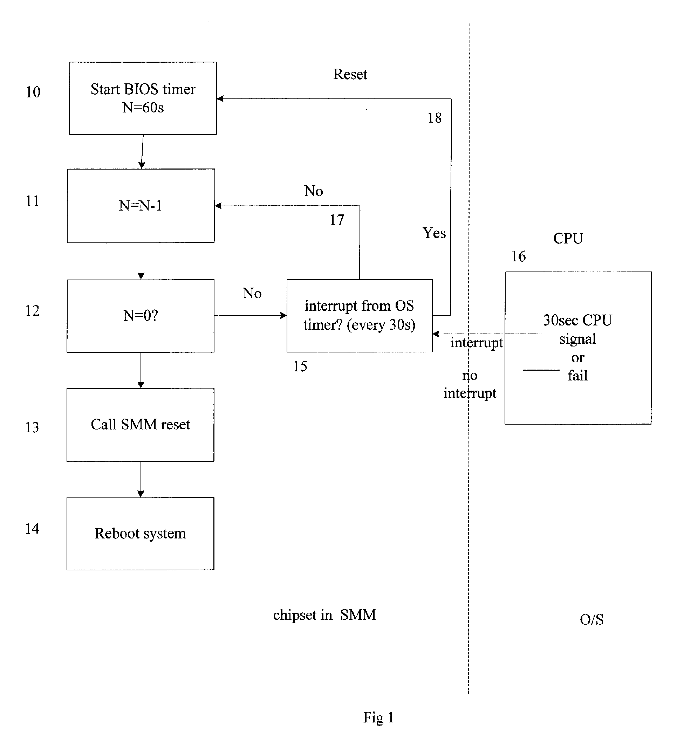

Figure 1: illustrates a flow diagram showing the steps in a failure detection system.

### Best Mode for Carrying Out the Invention

This specification will not discuss in detail the process by which a computer locks up or otherwise enters a non-responsive state. For the purposes of the invention it is assumed that a computer failure has manifested itself by the machine entering into a state where it is not possible to use the operating system in order to diagnose or rectify the error.

Such states are often the result of hardware faults such as memory corruption, processor overheating or similar. Other failures can reflect improper or faulty interaction between the operating system or application software and the computers hardware. In any event, the microprocessor becomes unable to process commands and either halts or runs in a closed loop which cannot be interrupted.

Cycling the power of a hung computer will usually reboot the machine and allow a user to run diagnostics or simply return the computer to a functional state. However, as noted in the preamble, this is impossible if the computer is remote or is intended to operate autonomously without user intervention.

As noted in the background discussion, watchdog circuits can be effective in monitoring a computer for system hangs. However these solutions involve adding specific hardware to the machine. This type of technique detects a heartbeat signal or otherwise checks for the computers operational sanity. If the sanity check fails, remedial action can be taken such as notifying a system administrator or carrying out autonomous system diagnostics and/or system restart.

The invention dispenses with the need for watchdog circuitry or any other extrinsic hardware or system monitoring processes by exploiting functionality and hardware which has hitherto been concerned with power management. In the present exemplary embodiment this functionality is implemented using the System Management Mode (SMM) of a CPU.

The system management mode was originally introduced in the i486 series of microprocessors and is now a well-accepted technique for implementing advanced power management functions.

The System Management Mode provides a mechanism by which the processor operation can be interrupted and then resumed in a manner which is transparent to the operation system or application being run on the system. SMM is an operating mode along with the protected, real and virtual modes.

SMM is implemented through a high priority SMI (System Management Interrupt). An interrupt is a signal informing a program or the operating system that an event has occurred. When a program receives an interrupt signal, it takes a specified action which can cause a program to suspend itself temporarily to service the interrupt.

An SMI is non-maskable interrupt (NMI) which has a higher priority than a standard NMI and can be used to perform system management functions independent of the CPU operating mode.

According to the usual power-management functions of SMM, activating the SMI invokes a sequence that saves the operating state of the microprocessor into a separate SMM secure memory address space (SMRAM). This secure address space is independent of the main system memory.

After the state of the processor (CPU) is saved, the CPU is forced into System Management Mode and begins execution out of that separate address space at the processor reset address where a jump to the SMM code is executed. This code performs its system management function and then resumes execution of the normal system software by executing an SMM CPU state restore opcode sequence. This reloads the saved processor state (sometimes called re-establishing the CPU context) and resumes execution out of the main system memory space.

As the SMM memory space is independent of the main memory, complex power-management functions can be performed without interfering with the state or function of the computer. This is an extremely effective way of rapidly halting a computer in order to switch the machine to a low power state such as a hibernation state in which very little power is consumed. Further, using this technique the operational state of the machine can be restored rapidly when the user indicates a desire to switch to a normal operational state.

In a situation where a computer has undergone a microprocessor hang or had its memory corrupted, the invention usefully exploits this functionality in order to autonomously monitor the sanity of a computer system.

To this end, memory faults or microprocessor hangs will not affect the operation of SMM. Even if the higher-level resources of the computer have failed or the working memory (RAM) has been corrupted, SMM functionality can be used to detect such a failure and take appropriate remedial action.

According to a preferred embodiment of the invention, a computers operating system is modified to provide a sanity check output in the form of a heartbeat signal. This is a periodic output shown in figure 1 between the CPU 16 and the functional block 15, which is asserted at an input detectable by the SMM. Alternatively, if it is possible, some form of regular output already existing in the normal function of the operating system can be used.

The SMM slow timer is used to count down to a SMI in the form of a reset call. This is shown in figure 1 by the functional blocks 10, 11 and 12. The slow timer operates independently of the microprocessor so is therefore able to continue operation even when the microprocessors normal functions have failed.

The SMM slow timer countdown period can be chosen so that a suitable number of heartbeat inputs would be emitted in course of the complete countdown period. This is so that if for some reason, a proportion of the heartbeat signals are not detected (15) by the SMM routine, it does not trigger an unnecessary reset. Alternatively the countdown period may be 60 seconds with the SMM reset service wakeup period being 30 seconds.

The SMM slow timer (10) is reset (18) to zero every time is detects a heartbeat signal. This is interpreted by the SMM as representing the normal operation of the microprocessor as embodied by the heartbeat output of the OS software.

If the processor hangs, the OS ceases emitting heartbeat signals (see the lower part of the functional block 16 in figure 1) and the SMM slow timer successfully counts down to zero (12). Once it reaches zero, the reset service is called (13) and, in the preferred embodiment, the system rebooted (14).

It is known to configure a computer to reboot to a recovery system from which diagnostics can be performed or to an operational state that the machine had prior to the system failure. Alternatively, the SMI can initiate other processes such as activating external hardware for communicating the system failure to an off-site administrator. Many boot procedures are known and these will depend on the operating system used and the post-crash functionality which is desired. It may be that the computer is to be booted to a state where administrative functions can be performed and/or a state where user login or other processes are disabled so that diagnostics can be carried out.

In a preferred embodiment, the invention may be applied to PCs running operating systems such as the various versions of Windows. In such an environment, the invention can, if desired, autonomously restore the machine to its pre-crash state with essentially no external input. Some post-crash diagnostics such as disk integrity checking may be performed. However, it is feasible that in certain embodiments, a crash and recovery of an unattended computer could occur without any user awareness whatsoever.

Alternatively, the invention may be implemented on other architectures, for example unix machines. In this case, a more complex post-crash diagnostic regime may be required given that some types of unix operating systems implement virtual file systems which are held in memory and written periodically to disk either automatically or in response to a user command. In such a case it is possible that a system might crash unsynced and the filesystem not have been written to disk. This can lead to file system corruption and checking and repair routine may be necessary as part of the post-crash boot procedure. This could be automated using various techniques including boot scripts.

To implement this embodiment of the invention, the hardware BIOS would need to be modified to allow control of the SMM at the basic level which is required. Such modifications would be in within the scope of one skilled in the field and will not be discussed in detail. SMM functions are well documented and the reader is referred to the datasheet for the specific CPU which is to be incorporated into the machine.

In an alternative embodiment, the invention may be implemented using, where available, PC motherboard chipsets. This embodiment avoids the need to change the SMM handler code and operates by exploiting the functionality of the chipsets slow timer. According to this embodiment, current chipsets, for example the Intel ICH chipset, incorporates a TCO register to control the events generated by the chipsets slow timer. In one embodiment, the chipset can be configured so that the slow timer is set to a given value and the filter is configured so that a reset signal is automatically sent to all of the chips on the motherboard when the slow timer reaches zero. This causes the machine to reboot. Thus so long as the system is stable and periodically resets the chipset slow timer the machine does not reboot the system.

Thus the invention provides a relatively inexpensive way to implement an automated system for monitoring and responding to computer failures. It has particular application where machines are to be run unattended and may be adapted to suit the specific situation. The BIOS interface may be implemented at a level which is capable of manipulation at a user level in a manner analogous to control of the Advanced Power Management (APM) features of present chipsets.

Although the invention has been described by way of example and with reference to particular embodiments it is to be understood that modification and/or improvements may be made without departing from the scope of the appended claims.

Where in the foregoing description reference has been made to integers or elements having known equivalents, then such equivalents are herein incorporated as if individually set forth.

## Claims

1. A method of recovering from a computer system crash, the method including the steps of:
(d) configuring a computers chipset timer to count down for a predetermined interval;
(e) configuring the computers operating system application to supply the chipset with a heartbeat signal; wherein
(f) the chipset is adapted so that on receipt of at least one heartbeat signal from the operating system, the chipset timer is reset and begins counting down again, or, if no heartbeat signal is received from the operating system within the countdown period, it causes the computer system to reset.

2. A method as claimed in claim 1 wherein the chipset is integrated into or corresponds to a computers microprocessor.

3. A method as claimed as in claim 1 or 2 wherein the steps in the method are implemented using a System Management Mode which is adapted to function in a manner which is transparent to the operating system or any application running on the computer system.

4. A method as claimed in claim 3 wherein the chipset functions are implemented through a System Management Interrupt which is non-maskable and has a higher priority than a standard non-maskable interrupt and operates independently of the computer systems microprocessor operating mode.

5. A method as claimed in any preceding claim where if no heartbeat signal is detected within the chipset countdown period, the chipset calls a system management interrupt reset which causes the microprocessor to reboot thereby resetting the computer system.

6. A computer adapted to perform the method as claimed in any one of claims 1 to 5.

7. A chip or CPU adapted to perform the method as claimed in any one of claims 1 to 5.

8. A BIOS adapted to control the System Management Mode operations so as to carry out the heartbeat monitoring functions as claimed in any one of claims 1 to 5.
